# EUROPEAN PATENT SPECIFICATION

(11) **EP 3 892 874 B1**
(45) Date of publication and mention of the grant of the patent: **18.10.2023**
(21) Application number: 19894245.0
(22) Date of filing: 04.12.2019
(51) Int. Cl.: F16C 19/36, F16C 33/46

(54) **TAPERED ROLLER BEARING**
KEGELROLLENLAGER
ROULEMENT À ROULEAUX CONIQUES

(30) Priority: 07.12.2018 JP 2018229909; 30.10.2019 JP 2019197666
(43) Date of publication of application: 13.10.2021
(73) Proprietor: NTN Corporation, Osaka-shi, Osaka 550-0003 (JP)
(72) Inventor: HAYASHI Yasuyoshi, Kuwana-shi, Mie 511-8678 (JP); WAKISAKA Takashi, Kuwana-shi, Mie 511-8678 (JP); MANDA Sahoko, Kuwana-shi, Mie 511-8678 (JP)
(74) Representative: Grünecker Patent- und Rechtsanwälte PartG mbB
(86) International application number: PCT/JP2019/047323
(87) International publication number: WO 2020/116488

(56) References cited:
- JP-A- 2010 286 120
- JP-A- 2016 196 944
- JP-A- 2017 187 148
- JP-A- 2018 109 448
- JP-B1- S5 340 561
- US-A1- 2017 204 906

## Description

### TECHNICAL FIELD

The present invention relates to tapered roller bearings for use in speed reducers of robots and construction machines, and in particular relates to a tapered roller bearing having a small-diameter end and a large-diameter end of an outer ring track surface of an outer ring, and a small-diameter end and a large-diameter end of an inner ring track surface of an inner ring in which, of these four ends, a flange portion that radially inwardly protrudes is formed only at the large-diameter end of the outer ring track surface of the outer ring.

### BACKGROUND ART

Patent Literature 1 and Patent Literature 2, which shows a tapered roller bearing according to claim 1, individually disclose a tapered roller bearing in which a flange portion is not formed at the large-diameter end of the inner ring track surface of the inner ring, and the flange portion that radially inwardly protrudes is formed only at the large-diameter end of the outer ring track surface of the outer ring. However, this type of tapered roller bearing has rarely been made into products.

### CITATION LIST

### PATENT LITERATURE

Patent Literature 1: JP-U H01-85521 Gazette
Patent Literature 2: JP-A 2016-196944 Gazette

### SUMMARY OF INVENTION

### TECHNICAL PROBLEM

The reason is that the tapered roller bearing in which the flange portion is formed at the large-diameter end of the outer ring track surface of the outer ring has an extremely decreased pure axial load capacity when compared with a tapered roller bearing in which the flange portion is formed at the large-diameter end of the inner ring track surface of the inner ring.

Therefore, it is an object of the present invention to provide a tapered roller bearing in which a flange portion is formed at the large-diameter end of the outer ring track surface of the outer ring, capable of providing high moment stiffness and long life without extremely decreasing its pure axial load capacity.

### SOLUTION TO PROBLEM

In order to solve the above-described problem, the present invention provides a tapered roller bearing including: an outer ring having an outer ring track surface on its inner circumferential surface; an inner ring having an inner ring track surface on its outer circumferential surface; a plurality of tapered rollers rotatably disposed between the outer ring track surface and the inner ring track surface; and a retainer having a plurality of pockets for retaining the plurality of tapered rollers at a predetermined interval. The outer ring track surface of the outer ring has a small-diameter end and a large-diameter end, the inner ring track surface of the inner ring has a small-diameter end and a large-diameter end, and, of these four ends, a flange portion which radially inwardly protrudes is formed only at the large-diameter end of the outer ring track surface of the outer ring. In this arrangement, the tapered roller bearing has a contact angle (angle made by a center axis of the bearing and the outer ring track surface) of 40 through 50° and a roller angle not greater than 3.5°. With the arrangement disclosed above, the bearing becomes capable of providing high moment stiffness and long life without extremely decreasing its pure axial load capacity.

### ADVANTAGEOUS EFFECTS OF INVENTION

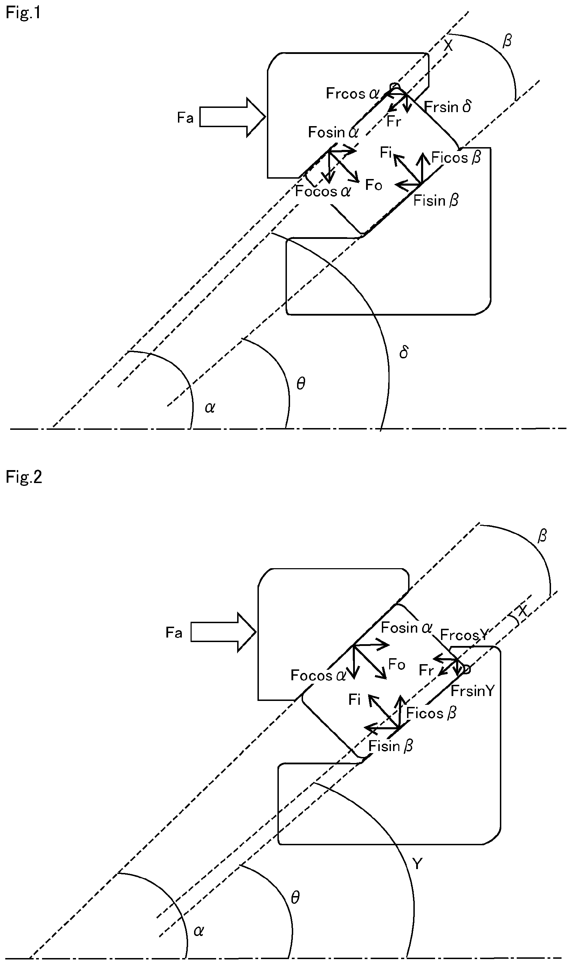

In tapered roller bearings, in a case where two bearings have a same roller size, quantity, contact angle, roller angle, and angle x made by a location at point of tangency of the roller relative to the flange portion and the flange-side track surface, when comparing the bearing as shown in Fig. 2 in which the flange portion is formed at the large-diameter end of the inner ring track surface of the inner ring (hereinafter called "inner-ring-flange bearing") with the bearing as shown in Fig. 1 in which the flange portion is formed at the large-diameter end of the outer ring track surface of the outer ring (hereinafter called "outer-ring-flange bearing"), the outer-ring-flange bearing receives greater rolling element loads (outer ring side rolling element load Fio, inner ring side rolling element load Fii) and a contact surface pressure between the rolling element and the track ring than the inner-ring-flange bearing when a pure axial load (Fa) is applied. However, if the contact angle is set to 40 through 50°, and the roller angle is set to a value not greater than 3.5° according to the present invention, it is possible to reduce the increase in the rolling element loads (outer ring side rolling element load Fio, inner ring side rolling element load Fii) and the contact surface pressure from the track ring when the pure axial load (Fa) is applied. It is also possible to reduce rolling element loads and a contact surface pressure from the track ring when a pure radial load (Fr) is applied.

Calculation formulas for the rolling element loads when the pure axial load is applied to the outer-ring-flange bearing as shown in Fig. 1 and the inner-ring-flange bearing as shown in Fig. 2 are as follows,
Fio: Outer ring side rolling element load (Inner-ring-flange bearing),
Foo: Outer ring side rolling element load (Outer-ring-flange bearing),
Fii: Inner ring side rolling element load (Inner-ring-flange bearing),
Foi: Inner ring side rolling element load (Outer-ring-flange bearing),
Fir: Flange side rolling element load (Inner-ring-flange bearing),
For: Flange side rolling element load (Outer-ring-flange bearing),
α: Outer ring half angle,
θ: Inner ring half angle,
β: Roller angle,
x: Angle made by a location at point of tangency of the roller relative to the flange portion and the flange-side track surface,
Y: Angle at point of tangency between a roller large end surface and an inner ring flange portion (θ+x), and
δ: Angle at point of tangency between a roller large end surface and an outer ring flange portion (α-x).

With the above, here are the formulas:
Fio = Fa/sinα
Foo = Foi (sin θ · sin δ + cos θ · cos δ)/ (cos α · cos δ + sin α · sin δ)
Fii = Fio (sin α · sin Y + cos α · cos Y)/ (cos θ · cos Y + sin θ · sin Y)
Foi = Fa/sin θ
Fir = (Fii cos θ - Fio cos α)/sin Y
For = (Foi cos θ - Foo cos α)/sin δ

Using the above-described calculating formulas, maximum rolling element load and maximum contact surface pressure when the pure axial load Fa is applied are obtained for each example in which the contact angle is set to 40 through 50°, and the roller angle is set to a value not greater than 3.5°, and for each example in which the contact angle is set to a value not greater than 40°, and the roller angle is set to a value not smaller than 3.5°. Results are shown in Table 1 through Table 6.

**[Table 1]**

| Comparison Item | | Unit | Example 1 | | Example 2 | |
|---|---|---|---|---|---|---|
| | | | Inner-Ring-Flange Bearing | Outer-Ring-Flange Bearing | Inner-Ring-Flange Bearing | Outer-Ring-Flange Bearing |
| Contact angle | | ° | 50 | | 50 | |
| Roller Angle | | ° | 3 | | 3.5 | |
| Maximum Rolling Element Load | Inner-Ring Side | % | 100 | 105 | 100 | 105 |
| | Outer-Ring Side | % | 100 | 105 | 100 | 106 |
| | Flange Side | % | 100 | 105 | 100 | 106 |
| Maximum Contact Surface Pressure | Inner-Ring Side | % | 100 | 102 | 100 | 103 |
| | Outer-Ring Side | % | 100 | 102 | 100 | 103 |

**[Table 2]**

| Comparison Item | | Unit | Example 3 | | Example 4 | |
|---|---|---|---|---|---|---|
| | | | Inner-Ring-Flange Bearing | Outer-Ring-Flange Bearing | Inner-Ring-Flange Bearing | Outer-Ring-Flange Bearing |
| Contact angle | | ° | 45 | | 45 | |
| Roller Angle | | ° | 3 | | 3.5 | |
| Maximum Rolling Element Load | Inner-Ring Side | % | 100 | 105 | 100 | 107 |
| | Outer-Ring Side | % | 100 | 104 | 100 | 107 |
| | Flange Side | % | 100 | 105 | 100 | 107 |
| Maximum Contact Surface Pressure | Inner-Ring Side | % | 100 | 102 | 100 | 103 |
| | Outer-Ring Side | % | 100 | 102 | 100 | 103 |

**[Table 3]**

| Comparison Item | | Unit | Example 5 | | Example 6 | |
|---|---|---|---|---|---|---|
| | | | Inner-Ring-Flange Bearing | Outer-Ring-Flange Bearing | Inner-Ring-Flange Bearing | Outer-Ring-Flange Bearing |
| Contact angle | | ° | 40 | | 40 | |
| Roller Angle | | ° | 3.5 | | 2 | |
| Maximum Rolling Element Load | Inner-Ring Side | % | 100 | 108 | 100 | 104 |
| | Outer-Ring Side | % | 100 | 108 | 100 | 104 |
| | Flange Side | % | 100 | 108 | 100 | 104 |
| Maximum Contact Surface Pressure | Inner-Ring Side | % | 100 | 104 | 100 | 102 |
| | Outer-Ring Side | % | 100 | 104 | 100 | 102 |

**[Table 4]**

| Comparison Item | | Unit | Example 7 | | Example 8 | |
|---|---|---|---|---|---|---|
| | | | Inner-Ring-Flange Bearing | Outer-Ring-Flange Bearing | Inner-Ring-Flange Bearing | Outer-Ring-Flange Bearing |
| Contact angle | | ° | 35 | | 40 | |
| Roller Angle | | ° | 3.5 | | 8 | |
| Maximum Rolling Element Load | Inner-Ring Side | % | 100 | 110 | 100 | 122 |
| | Outer-Ring Side | % | 100 | 110 | 100 | 120 |
| | Flange Side | % | 100 | 110 | 100 | 121 |
| Maximum Contact Surface Pressure | Inner-Ring Side | % | 100 | 105 | 100 | 110 |
| | Outer-Ring Side | % | 100 | 105 | 100 | 111 |

**[Table 5]**

| Comparison Item | | Unit | Example 9 | | Example 10 | |
|---|---|---|---|---|---|---|
| | | | Inner-Ring-Flange Bearing | Outer-Ring-Flange Bearing | Inner-Ring-Flange Bearing | Outer-Ring-Flange Bearing |
| Contact angle | | ° | 40 | | 10 | |
| Roller Angle | | ° | 5 | | 3.5 | |
| Maximum Rolling Element Load | Inner-Ring Side | % | 100 | 112 | 100 | 131 |
| | Outer-Ring Side | % | 100 | 112 | 100 | 131 |
| | Flange Side | % | 100 | 112 | 100 | 131 |
| Maximum Contact Surface Pressure | Inner-Ring Side | % | 100 | 106 | 100 | 114 |
| | Outer-Ring Side | % | 100 | 106 | 100 | 113 |

**[Table 6]**

| Comparison Item | | Unit | Example | 11 |
|---|---|---|---|---|
| | | | Inner-Ring-Flange Bearing | Outer-Ring-Flange Bearing |
| Contact angle | | ° | 30 | |
| Roller Angle | | ° | 8.5 | |
| Maximum Rolling Element Load | Inner-Ring Side | % | 100 | 137 |
| | Outer-Ring Side | % | 100 | 140 |
| | Flange Side | % | 100 | 139 |
| Maximum Contact Surface Pressure | Inner-Ring Side | % | 100 | 117 |
| | Outer-Ring Side | % | 100 | 118 |

From the results shown in Table 1 through Table 6, when comparing the outer ring flange bearing with the inner ring flange bearing, both of which have a same bearing dimension, with the maximum rolling element load and maximum contact surface pressure of the inner ring flange bearing being 100 percent, it was confirmed that the outer ring flange bearings within the specifications set by the present invention are capable of holding both of the maximum rolling element load and the maximum contact surface pressure within 10 percent increase over their counterpart inner ring flange bearings, while in the outer ring flange bearings which are out of the specifications set by the present invention, at least one of the maximum rolling element load or the maximum contact surface pressure increased at a rate greater than 10 percent over their counterpart inner ring flange bearings.

### BRIEF DESCRIPTION OF DRAWINGS

Fig. 1 is an explanatory drawing which schematically shows component forces of an outer ring side rolling element load, an inner ring side rolling element load, and a flange-side rolling element load when a pure axial load is applied to a tapered roller bearing in which a flange portion is formed at a large-diameter end of an outer ring track surface of an outer ring.
Fig. 2 is an explanatory drawing which schematically shows component forces of an outer ring side rolling element load, an inner ring side rolling element load, and a flange side rolling element load when a pure axial load is applied to a tapered roller bearing in which a flange portion is formed at a large-diameter end of an inner ring track surface of an inner ring.
Fig. 3 is an enlarged partial sectional view of a tapered roller bearing according to an embodiment of the present invention, taken by cutting along a pillar portion of a retainer.
Fig. 4 is an enlarged partial sectional view showing a state in which the tapered roller bearing in Fig. 3 is assembled to a housing.
Fig. 5 is a simplified schematic illustration which conceptually shows a contact area between a large flange portion at an outer ring side of the tapered roller bearing in Fig. 3 and a tapered roller.
Fig. 6 is an enlarged view showing a state in which a tapered roller is pressed o contact with a roller guide surface of a retainer of the embodiment in Fig. 3.
Fig. 7 is an enlarged view showing a state in which a tapered roller is pressed to contact with a tab of the retainer of the embodiment in Fig. 3.
Fig. 8A is an enlarged partial sectional view showing a step for insertion of a roller-retainer assy into an outer ring.
Fig. 8B is an enlarged partial sectional view showing a step for insertion of the roller-retainer assy into the outer ring.
Fig. 8C is an enlarged partial sectional view showing a step for insertion of the roller-retainer assy into the outer ring.
Fig. 9 is a front view of the outer ring in the embodiment in Fig. 3.
Fig. 10 is a rear view of the outer ring in the embodiment in Fig. 3.
Fig. 11 is a left side view of the outer ring in the embodiment in Fig. 3.
Fig. 12 is a right side view of the outer ring in the embodiment in Fig. 3.
Fig. 13 is a plan view of the outer ring in the embodiment in Fig. 3.
Fig. 14 is a bottom view of the outer ring in the embodiment in Fig. 3.
Fig. 15 is a sectional view taken in a line A-A in Fig. 9.
Fig. 16 is an enlarged sectional view taken in a line B-B in Fig. 15.
Fig. 17 is a front view of a retainer in the embodiment in Fig. 3.
Fig. 18 is a rear view of the retainer in the embodiment in Fig. 3.
Fig. 19 is a left side view of the retainer in the embodiment in Fig. 3.
Fig. 20 is a right side view of the retainer in the embodiment in Fig. 3.
Fig. 21 is a plan view of the retainer in the embodiment in Fig. 3.
Fig. 22 is a bottom view of the retainer in the embodiment in Fig. 3.
Fig. 23 is a sectional view taken in a line A-A in Fig. 17.
Fig. 24 is a perspective view of the retainer of the embodiment in Fig. 3 viewed from a small-diameter side.
Fig. 25 is a perspective view of the retainer of the embodiment in Fig. 3 viewed from a large-diameter side.
Fig. 26 is a sectional view taken in a line H-H in Fig. 17.
Fig. 27 is an enlarged sectional view taken in a line B-B in Fig. 23.
Fig. 28 is an enlarged sectional view taken in a line C-C in Fig. 17.
Fig. 29 is an enlarged sectional view taken in a line D-D in Fig. 24.
Fig. 30 is an enlarged sectional view taken in a line E-E in Fig. 24.
Fig. 31 is an enlarged sectional view taken in a line F-F in Fig. 25.
Fig. 32 is an enlarged sectional view taken in a line G-G in Fig. 25.
Fig. 33 is an enlarged sectional view taken in a line I-I in Fig. 26.
Fig. 34 is a graph which shows moment stiffness ratio in examples wherein each contact angle is varied.
Fig. 35 is a graph which shows life ratio in examples wherein each contact angle is varied.
Fig. 36 is an enlarged sectional view of a conventional tapered roller bearing, taken by cutting along a pillar portion of a retainer.
Fig. 37 is an enlarged partial sectional view showing a state in which the tapered roller bearing in Fig. 36 is assembled to a housing.
Fig. 38 is a simplified schematic illustration which conceptually shows a contact area between a large flange portion at an inner ring side of the tapered roller bearing in Fig. 36 and a tapered roller.

### DESCRIPTION OF EMBODIMENTS

Hereinafter, embodiments of the present invention will be described with reference to the attached drawings.

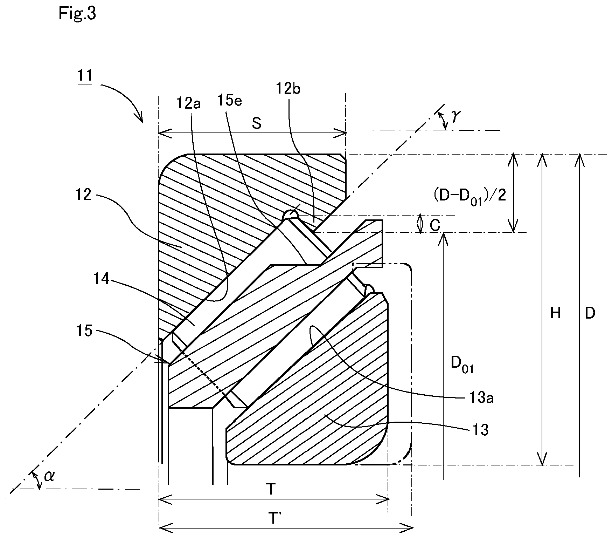

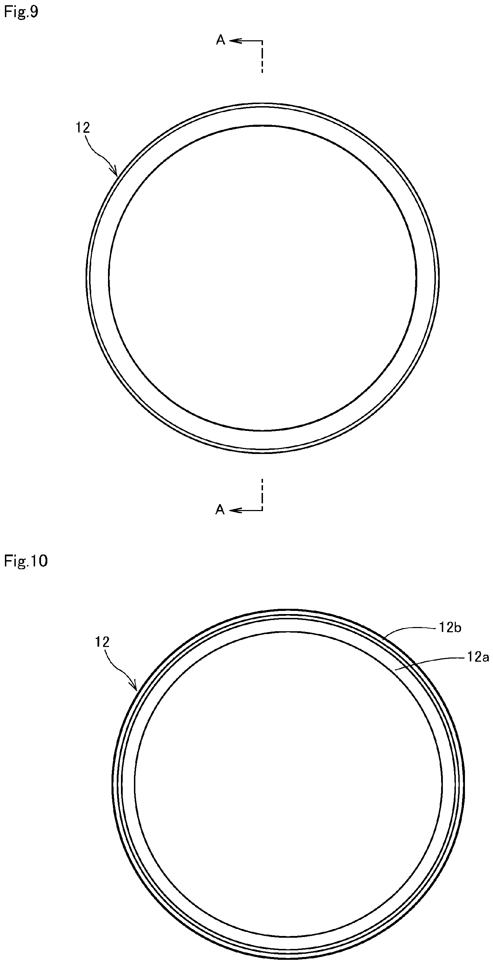

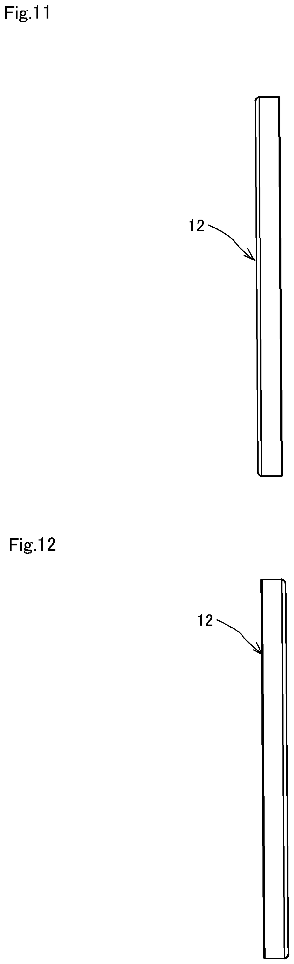

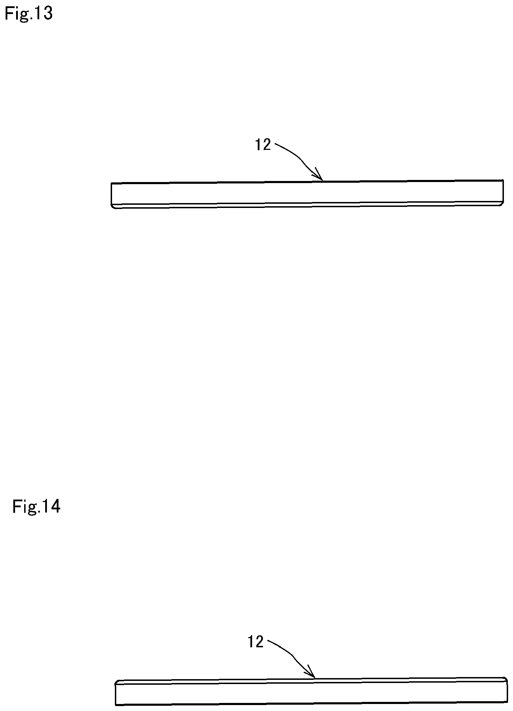

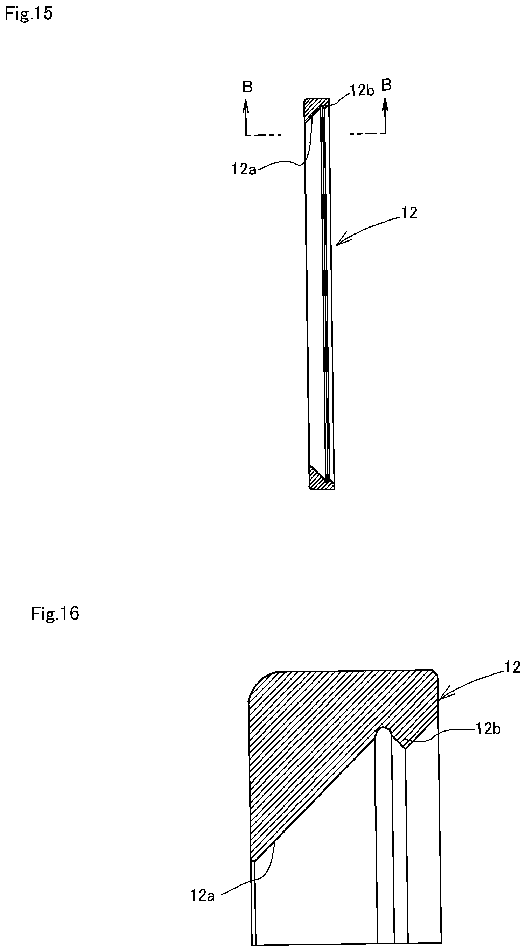

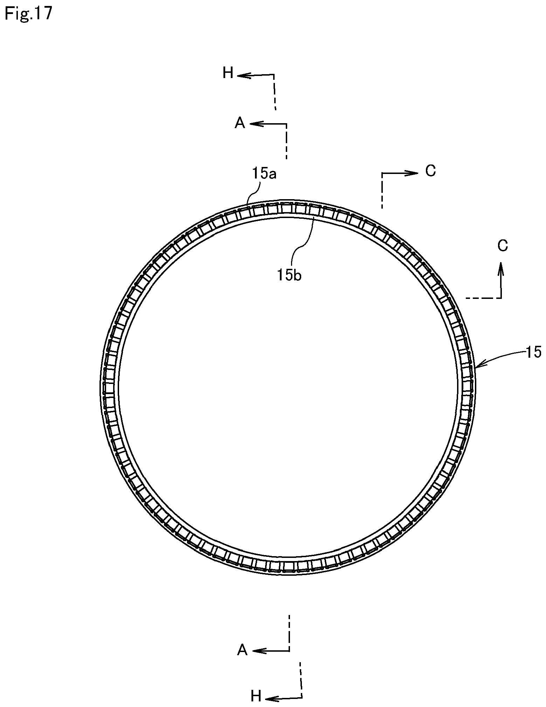

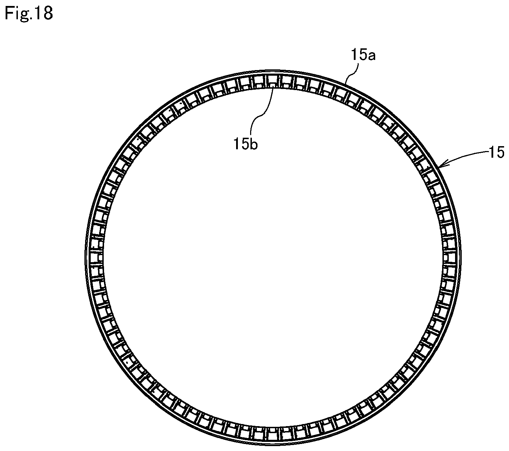

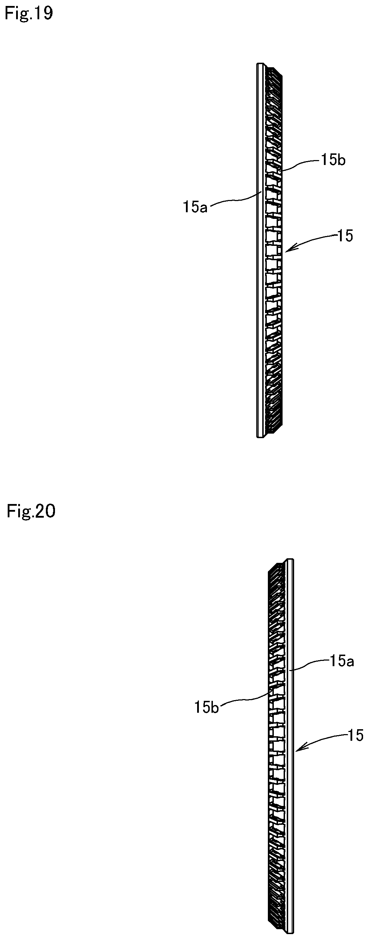

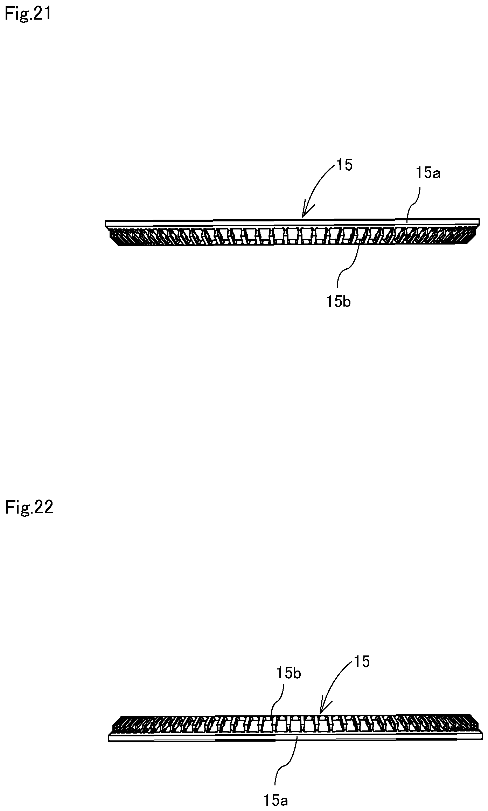

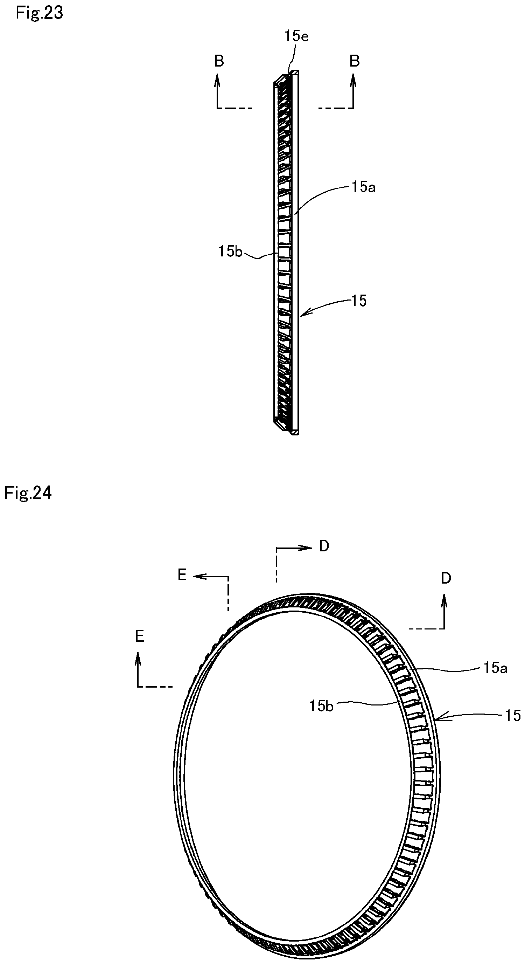

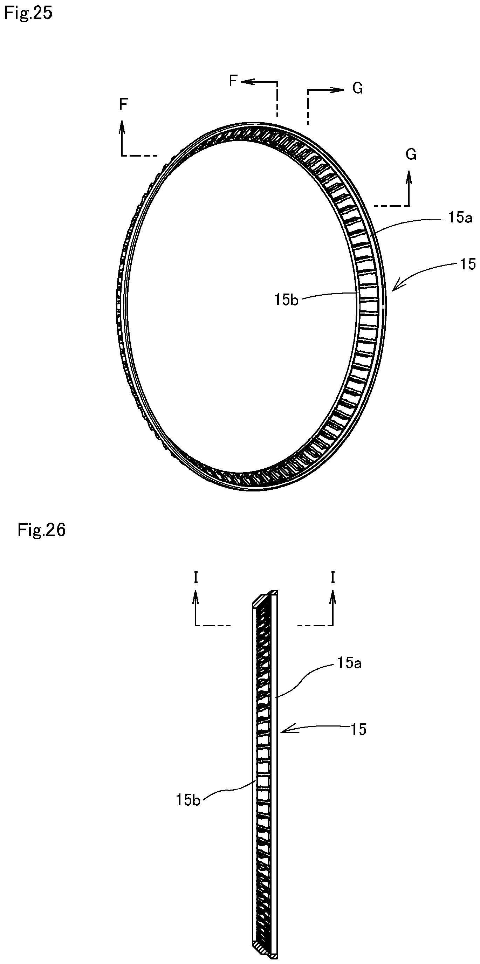

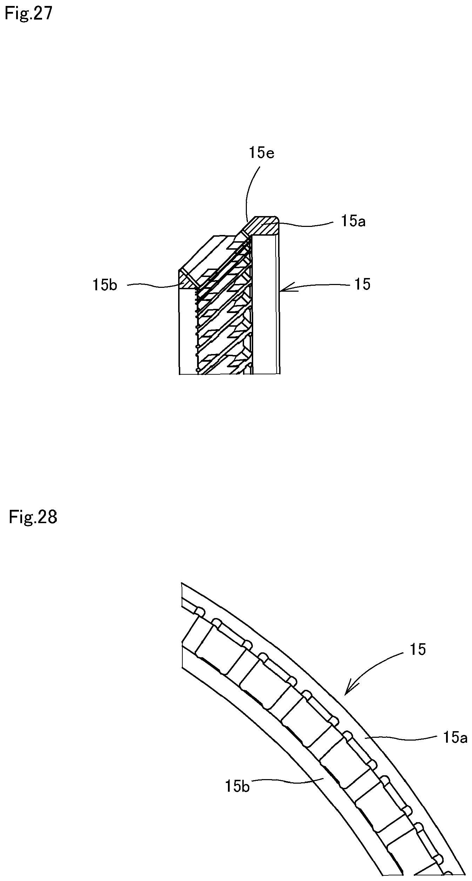

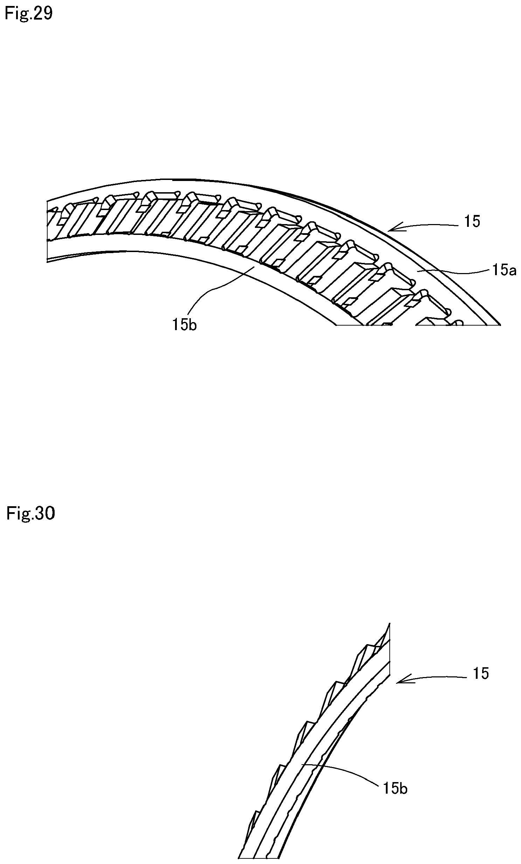

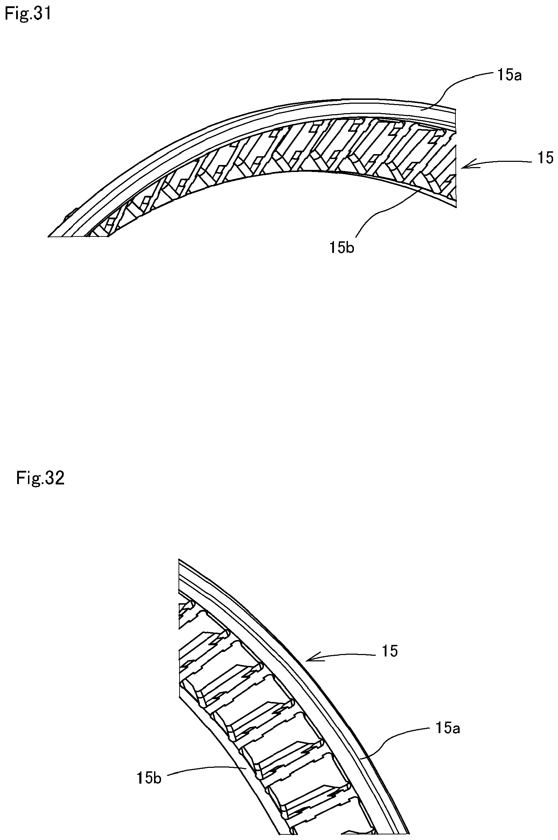

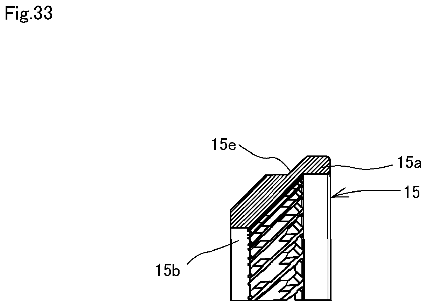

A tapered roller bearing 11 according to the present invention has a steep contact angle α of 40° through 50°, and a gentle roller angle not greater than 3.5°. The tapered roller bearing 11 according to an embodiment as shown in Fig. 3 through Fig. 33 has a contact angle α of 45°, and a roller angle of 3.5°.

As shown in Fig. 3, the tapered roller bearing 11 according to the embodiment of the present invention includes: an outer ring 12 having an outer ring track surface 12a on its inner circumferential surface; an inner ring 13 having an inner ring track surface 13a on its outer circumferential surface; a plurality of tapered rollers 14 rotatably disposed between the outer ring track surface 12a and the inner ring surface 13a; and a retainer 15 having a plurality of pockets for retaining the plurality of tapered rollers 14 at a predetermined interval.

The tapered roller bearing 11 according to the present invention is intended for high moment stiffness with a steep contact angle α of 40 through 50°. The tapered roller bearing 11 according to the embodiment in Fig. 3 has a contact angle α of 45°.

In the tapered roller bearing 11 according to the embodiment of the present invention, the outer ring track surface 12a of the outer ring 12 has a small-diameter end and a large-diameter end, the inner ring track surface 13a of the inner ring 13 has a small-diameter end and a large-diameter end, and, of these four ends, a flange portion 12b that radially inwardly protrudes is formed only at the large-diameter end of the outer ring track surface 12a of the outer ring 12.

The small-diameter end of the inner ring 13 does not have a small flange, and the rollers have an increased length as much as the length of eliminated small flange, for increased load capacity. At the same time, the flange portion 12b that radially inwardly protrudes is formed only at the large-diameter end of the outer ring track surface 12a of the outer ring 12. The large-diameter end of the inner ring track surface 13a of the inner ring 13 does not have a flange portion.

The tapered roller bearing 11 with the steep contact angle of 40 through 50° has a large space in its axial direction between the large-diameter end of the outer ring track surface 12a of the outer ring 12 and the large-diameter-side end surface of the inner ring 13. In the present invention, the flange portion 12b that radially inwardly protrudes is formed by using the space.

By forming the flange portion 12b that radially inwardly protrudes only at the large-diameter end of the outer ring track surface 12a of the outer ring 12 and by eliminating the flange portion at the large-diameter end of the inner ring track surface 13a of the inner ring 13, it becomes possible to compactify its axial dimension.

Namely, as indicated in alternate long and two short dashes lines in Fig. 3, when the flange portion 12b is formed at the large-diameter end of the inner ring track surface 13a of the inner ring 13, the axial width will be T'. By eliminating the flange portion at the large-diameter end of the inner ring track surface 13a of the inner ring 13, it becomes possible to decrease the axial width of the inner ring 13. When the flange portion 12b that radially inwardly protrudes is formed at the large-diameter end of the outer ring track surface 12a of the outer ring 12, the axial width will be T. Therefore, it is possible to compactify the axial width by T'-T.

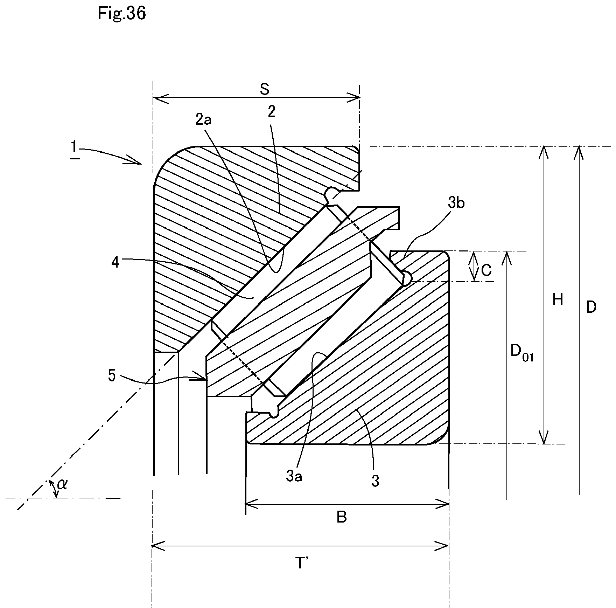

By forming the flange portion 12b that radially inwardly protrudes at the large-diameter end of the outer ring track surface 12a of the outer ring 12 as disclosed in the present invention, it becomes possible to increase stiffness of the flange portion compared with a conventional tapered roller bearing 1 as shown in Fig. 36 which has a flange portion formed at the large-diameter end of the inner ring track surface 13a of the inner ring 13.

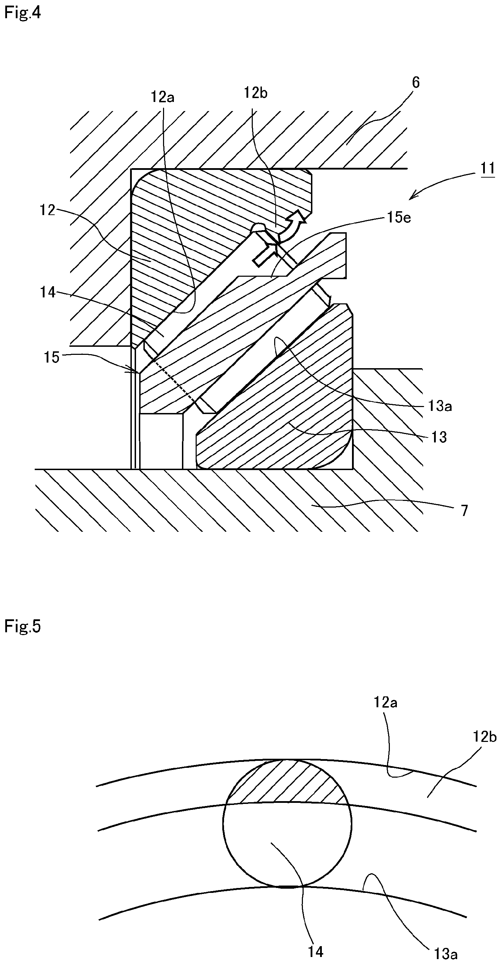

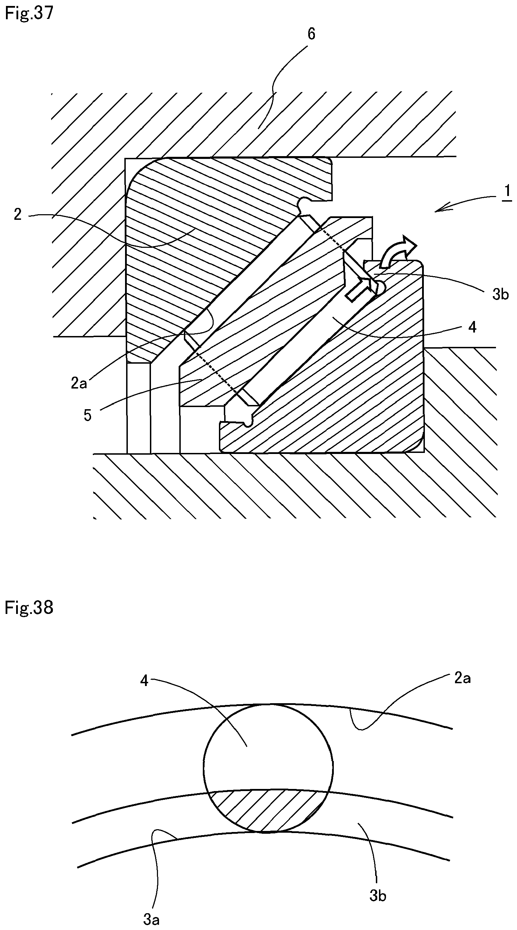

Namely, when comparing a case where the flange portion 12b that radially inwardly protrudes is formed at the large-diameter end of the outer ring track surface 12a of the outer ring 12 as shown in Fig. 3 with a case where a flange portion 3b is formed at the large-diameter end of the inner ring track surface 3a of the inner ring 3 as shown in Fig. 36, it is confirmed that even if the height of the flange portion C (a radial distance from an intersection between the track surface and the flange surface to an apex of the flange portion) is the same, a contact area between the roller end surface and the outer ring flange surface as shown in Fig. 5 is greater, by approximately 7 percent, than a contact area between the roller end surface and the inner ring flange surface of the conventional arrangement as shown in Fig. 38. This means that induced thrust force generated in the roller is received by the greater area when the outer ring has a flange, which decreases stress at the place of contact, leading to decreased contact strain between the roller end surface and the flange surface.

Also, in the conventional arrangement as shown in Fig. 36, where the flange portion 3b is formed at the large-diameter end of the inner ring 3, the induced thrust force generated in a tapered roller 4 is received by the flange portion 3b as indicated by white arrows in Fig. 37, and this poses a potential problem that a bending stress acting on the flange portion 3b may cause the flange portion 3b to distort. On the contrary, according to the present invention as shown in Fig. 4, where the flange portion 12b is formed at the large-diameter end of the outer ring 12, it is possible, as indicated by white arrows, to receive the induced thrust force generated in a tapered roller 14, i.e., the bending stress acting on the flange portion 12b of the outer ring 12, with the housing 6, and this increases stiffness of the flange portion 12b. Note that in the conventional arrangement as shown in Fig. 36, a reference sign 2 represents an outer ring, a sign 2a represents an outer ring track surface, and a sign 5 represents a retainer.

In the present invention, the retainer 15 may be made of a resin.

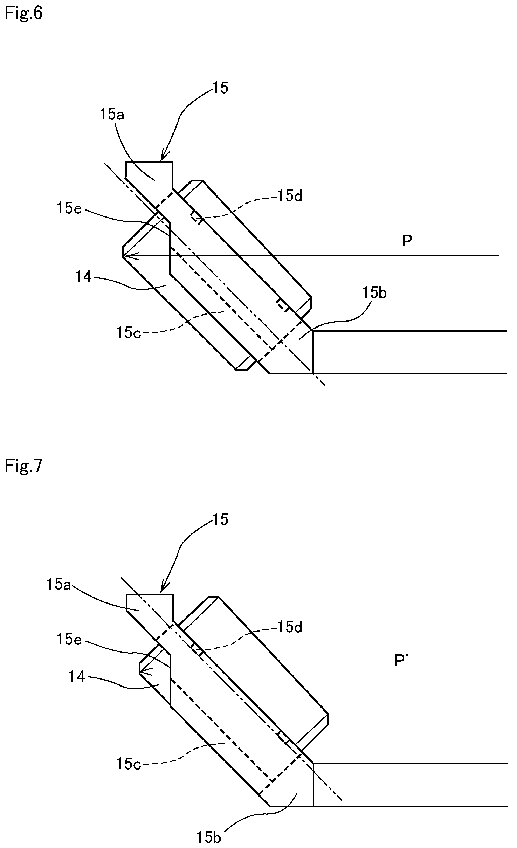

As shown in Fig. 6 and Fig. 7, the retainer 15 has a large-diameter ring portion 15a on its large-diameter side; a small-diameter ring portion 15b on its small-diameter side; roller guide surfaces 15c on its outer diameter portion for guiding the tapered rollers 14; and tabs 15d on its inner diameter surface for retaining the tapered rollers 14. However, the position of the roller guide surfaces 15c for guiding the tapered rollers 14 and the tabs 15d for retaining the tapered rollers 14 may be reversed. Also, the retainer 15 is provided with, on an outer circumferential surface of the large-diameter ring portion 15a, a cutout 15e to avoid interference with the flange portion 12b of the outer ring 12.

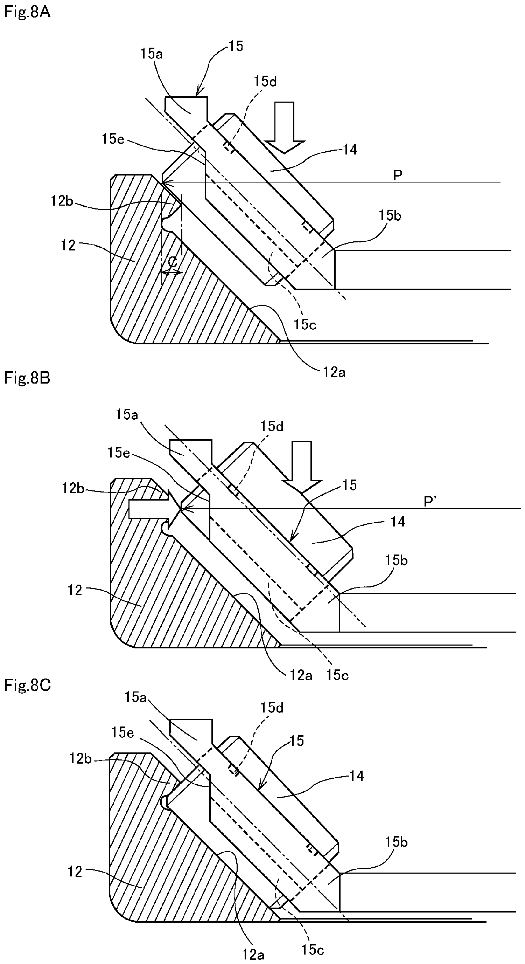

As shown in Fig. 6, a circumradius of the roller is represented with P when the tapered roller 14 is pressed to contact with the roller guide surface 15c which is at the outer diameter side of the retainer 15; as shown in Fig. 7, a circumradius of the roller is represented with P' when the tapered roller 14 is pressed to contact with the tabs 15d which are at the inner diameter side of the retainer 15. With these circumradii defined as the above, evaluation was made by inserting a roller-retainer assy into the outer ring 12 following steps as shown in Figs. 8A, 8B and 8C, to see easiness of insertion by not varying the flange height C of the flange portion 12b but varying the contact angle α, flange outer diameter angle γ, and |P-P'|. Results are shown in Tables 7 through 11.

From the results in Table 7 through Table 11, it was confirmed that those bearings which have their contact angles set to 40 through 50° exhibit better insertability of the roller-retainer assy when |P-P'|≧C and the flange's large-diameter-side angle γ is 35° through 50°.

**[Table 7]**

| Contact Angle α° | Flange Outer Diameter Angle γ° | C | \|P-P'\| | Easiness of Insertion |
|---|---|---|---|---|
| 35 | 30 | 1 | 0.8 | × |
| 35 | 30 | 1 | 1 | × |
| 35 | 35 | 1 | 0.8 | × |
| 35 | 35 | 1 | 1 | × |
| 35 | 45 | 1 | 0.8 | × |
| 35 | 45 | 1 | 1 | × |
| 35 | 45 | 1 | 2 | × |
| 35 | 50 | 1 | 0.8 | × |
| 35 | 50 | 1 | 1 | × |
| 35 | 50 | 1 | 2 | × |
| 35 | 55 | 1 | 1 | × |
| 35 | 55 | 1 | 2 | × |

**[Table 8]**

| Contact Angle α° | Flange Outer Diameter Angle γ° | C | \|P-P'\| | Easiness of Insertion |
|---|---|---|---|---|
| 40 | 30 | 1 | 0.8 | × |
| 40 | 30 | 1 | 1 | × |
| 40 | 35 | 1 | 0.8 | × |
| 40 | 35 | 1 | 1 | ○ |
| 40 | 45 | 1 | 0.8 | × |
| 40 | 45 | 1 | 1 | ○ |
| 40 | 45 | 1 | 2 | ○ |
| 40 | 50 | 1 | 0.8 | × |
| 40 | 50 | 1 | 1 | ○ |
| 40 | 55 | 1 | 2 | ○ |
| 40 | 55 | 1 | 1 | × |
| 40 | 55 | 1 | 2 | × |

**[Table 9]**

| Contact Angle α° | Flange Outer Diameter Angle γ° | C | \|P-P'\| | Easiness of Insertion |
|---|---|---|---|---|
| 45 | 30 | 1 | 0.8 | × |
| 45 | 30 | 1 | 1 | × |
| 45 | 35 | 1 | 0.8 | × |
| 45 | 35 | 1 | 1 | ○ |
| 45 | 45 | 1 | 0.8 | × |
| 45 | 45 | 1 | 1 | ○ |
| 45 | 45 | 1 | 2 | ○ |
| 45 | 50 | 1 | 0.8 | × |
| 45 | 50 | 1 | 1 | ○ |
| 45 | 50 | 1 | 2 | ○ |
| 45 | 55 | 1 | 1 | × |
| 45 | 55 | 1 | 2 | × |

**[Table 10]**

| Contact Angle α° | Flange Outer Diameter Angle γ° | C | \|P-P'\| | Easiness of Insertion |
|---|---|---|---|---|
| 50 | 30 | 1 | 0.8 | × |
| 50 | 30 | 1 | 1 | × |
| 50 | 35 | 1 | 0.8 | × |
| 50 | 35 | 1 | 1 | ○ |
| 50 | 45 | 1 | 0.8 | × |
| 50 | 45 | 1 | 1 | ○ |
| 50 | 45 | 1 | 2 | ○ |
| 50 | 50 | 1 | 0.8 | × |
| 50 | 50 | 1 | 1 | ○ |
| 50 | 50 | 1 | 2 | ○ |
| 50 | 55 | 1 | 1 | × |
| 50 | 55 | 1 | 2 | × |

**[Table 11]**

| Contact Angle α° | Flange Outer Diameter Angle γ° | C | \|P-P'\| | Easiness of Insertion |
|---|---|---|---|---|
| 55 | 30 | 1 | 0.8 | × |
| 55 | 30 | 1 | 1 | × |
| 55 | 35 | 1 | 0.8 | × |
| 55 | 35 | 1 | 1 | × |
| 55 | 45 | 1 | 0.8 | × |
| 55 | 45 | 1 | 1 | × |
| 55 | 45 | 1 | 2 | × |
| 55 | 50 | 1 | 0.8 | × |
| 55 | 50 | 1 | 1 | × |
| 55 | 50 | 1 | 2 | × |
| 55 | 55 | 1 | 1 | × |
| 55 | 55 | 1 | 2 | × |

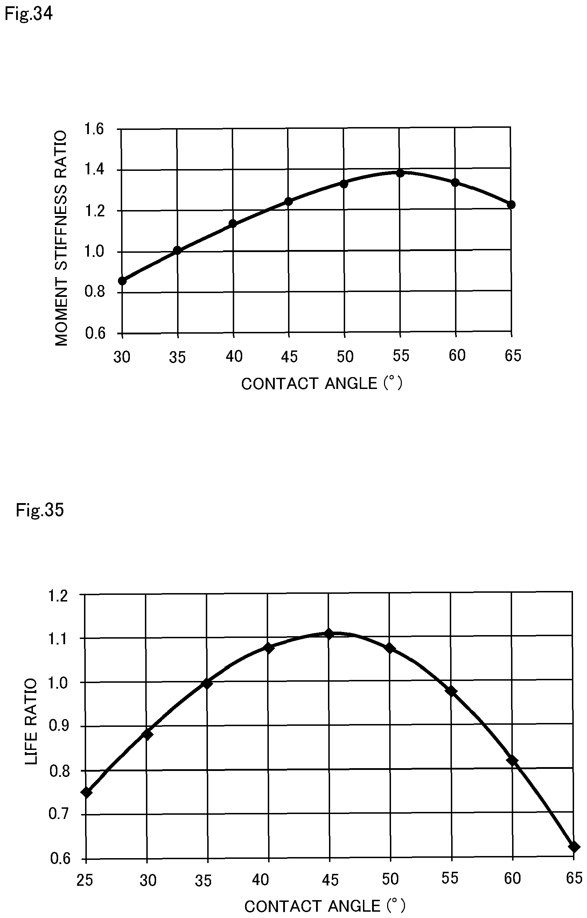

The tapered roller bearing 11 according to the present invention, having the contact angle of 40 through 50°, has moment stiffness expressed in a graph in Fig. 34 and life ratio expressed in a graph in Fig. 35 when only the contact angle is varied, with an external load, the bearing's PCD, and size and quantity of the rollers maintained constant. From the graphs given in Fig. 34 and Fig. 35, overall evaluation was made relative to each contact angle. Results are shown in Table 12, i.e., it was confirmed that by setting the contact angle in the range of 40 through 50°, it becomes possible to improve both the moment stiffness and the life of the bearing.

**[Table 12]**

| | | | | | | | | | |
|---|---|---|---|---|---|---|---|---|---|
| Contact Angle | 25 | 30 | 35 | 40 | 45 | 50 | 55 | 60 | 65 |
| Moment Stiffness | × | ○ | - | ○ | ○ | ○ | ⊚ | ○ | ○ |
| Life | × | × | - | ○ | ⊚ | ○ | × | × | × |
| Total Evaluation | × | × | - | ⊚ | ⊚ | ⊚ | × | × | × |

The present invention is not limited to any of the embodiments described thus far, and it is obvious that the invention may be modified in many other ways within the scope of the present invention. The scope of the present invention is defined by the appended CLAIMS.

### REFERENCE SIGNS LIST

- 11:: Bearing
- 12:: Outer ring
- 12a:: Outer Ring Track Surface
- 12b:: Flange portion
- 13:: Inner ring
- 13a:: Inner ring track surface
- 15:: Retainer
- 15a:: Large-Diameter Ring Portion
- 15b:: Small-Diameter Ring Portion
- 15c:: Guide Surface
- 15d:: Claw
- 15e:: Cutout

## Claims

1. A tapered roller bearing (11) comprising: an outer ring (12) having an outer ring track surface (12a) on its inner circumferential surface; an inner ring (13) having an inner ring track surface (13a) on its outer circumferential surface; a plurality of tapered rollers (14) rotatably disposed between the outer ring track surface (12a) and the inner ring track surface (13a); and a retainer (15) having a plurality of pockets for retaining the plurality of tapered rollers (14) at a predetermined interval; the outer ring track surface (12a) of the outer ring (12) having a small-diameter end and a large-diameter end, the inner ring track surface (13a) of the inner ring (13) having a small-diameter end and a large-diameter end, and, of these four ends, a flange portion (12b) that radially inwardly protrudes is formed only at the large-diameter end of the outer ring track surface (12a) of the outer ring (12);
**characterized in that**
the tapered roller bearing (11) has a contact angle of 40 through 50° and a roller angle not greater than 3.5°.

2. The tapered roller bearing (11) according to Claim 1, wherein the retainer (15) has: a tapered roller guide surface (15c) on its outer diameter side or inner diameter side; one or more tabs (15d) for preventing dislocation of the tapered rollers (14) on the outer diameter side or inner diameter side of the retainer (15) not having the roller guide surface (15c) ; and a cutout (15e) formed on an outer circumferential surface of a large-diameter ring portion (15a) of the retainer (15) for making the ring portion (15a) thinner than a pillar portion having the guide surface (15c) of the retainer (15).

3. The tapered roller bearing (11) according to Claim 2, wherein a relationship expressed as |P-P'|≧C is satisfied, where P represents a circumradius of the roller (14) when the roller (14) is in contact with the roller guide surface (15c); P' represents a circumradius of the roller (14) when the roller (14) is in contact with the tab (15d) of the retainer (15); and C represents a height of the outer ring flange (12b) from the outer ring track surface (12a); and the flange (12b) has an outer diameter angle γ of 35° through 50°.

## Patentansprüche

1. Kegelrollenlager (11), umfassend: einen Außenring (12), der eine Außenring-Lauffläche (12a) auf seiner inneren Umfangsfläche aufweist; ein Innenring (13), der eine Innenring-Lauffläche (13a) auf seiner äußeren Umfangsfläche aufweist; eine Vielzahl von Kegelrollen (14), die drehbar zwischen der Außenring-Lauffläche (12a) und der Innenring-Lauffläche (13a) angeordnet sind; und einen Käfig (15), der eine Vielzahl von Taschen zum Halten der Vielzahl der Kegelrollen (14) in einem festgelegten Abstand aufweist; wobei die Außenring-Lauffläche (12a) des Außenrings (12) ein Ende mit kleinem Durchmesser und ein Ende mit großem Durchmesser aufweist, wobei die Innenring-Lauffläche (13a) des Innenrings (13) ein Ende mit kleinem Durchmesser und ein Ende mit großem Durchmesser aufweist, und von diesen vier Enden ein Flanschabschnitt (12b), der radial nach innen vorsteht, nur an dem Ende mit großem Durchmesser der Außenring-Lauffläche (12a) des Außenrings (12) ausgebildet ist;
**dadurch gekennzeichnet, dass**
das Kegelrollenlager (11) einen Kontaktwinkel von 40 bis 50° und einen Rollenwinkel von nicht mehr als 3,5° aufweist.

2. Das Kegelrollenlager (11) nach Anspruch 1, wobei der Käfig (15) aufweist: eine Kegelrollen-Führungsfläche (15c) auf seiner Außendurchmesserseite oder Innendurchmesserseite; eine oder mehrere Laschen (15d) zur Verhinderung einer Verschiebung der Kegelrollen (14) auf der Außendurchmesserseite oder Innendurchmesserseite des Käfigs (15), die nicht die Rollen-Führungsfläche (15c) aufweist; und eine Aussparung (15e), die auf einer Außenumfangsfläche eines Ringabschnitts (15a) mit großem Durchmesser des Käfigs (15) ausgebildet ist, um den Ringabschnitt (15a) dünner zu machen als einen Säulenabschnitt, der die Führungsfläche (15c) des Käfigs (15) aufweist.

3. Das Kegelrollenlager (11) nach Anspruch 2, wobei ein Verhältnis erfüllt ist, welches als |P-P'|≧C ausgedrückt wird, wobei P einen Umfangsradius der Rolle (14) darstellt, wenn sich die Rolle (14) in Kontakt mit der Rollen-Führungsfläche (15c) befindet; P' einen Umfangsradius der Rolle (14) darstellt, wenn sich die Rolle (14) in Kontakt mit der Lasche (15d) des Käfigs (15) befindet; und C eine Höhe des Außenring-Flansches (12b) ab der Außenring-Lauffläche (12a) darstellt; und der Flansch (12b) einen Außendurchmesserwinkel γ von 35° bis 50° aufweist.

## Revendications

1. Roulement à rouleaux coniques (11) comprenant : une bague externe (12) présentant une surface de piste externe (12a) sur sa surface circonférentielle interne ; une bague interne (13) présentant une surface de piste de bague interne (13a) sur sa surface circonférentielle externe ; une pluralité de rouleaux coniques (14) disposés en rotation entre la surface de piste de bague externe (12a) et la surface de piste de bague interne (13a) ; et un élément de retenue (15) présentant une pluralité de poches pour retenir la pluralité de rouleaux coniques (14) à un intervalle prédéterminé ; la surface de piste de bague externe (12a) de la bague externe (12) présentant une extrémité de petit diamètre et une extrémité de grand diamètre, la surface de piste de bague interne (13a) de la bague interne (13) présentant une extrémité de petit diamètre et une extrémité de grand diamètre, et, de ces quatre extrémités, une partie de bride (12b) qui déborde radialement vers l'intérieur est constituée uniquement sur l'extrémité de grand diamètre de la surface de piste de bague externe (12a) de la bague externe (12) ;
**caractérisé en ce que**
le roulement à rouleaux coniques (11) présente un angle de contact de 40 à 50 ° et un angle de rouleau inférieur à 3,5 °.

2. Le roulement à rouleaux coniques (11) selon la revendication 1, dans lequel l'élément de retenue (15) présente : une surface guide de rouleau conique (15c) sur son côté de diamètre externe ou son côté de diamètre interne ; un ou plusieurs ergots (15d) pour empêcher une dislocation des rouleaux coniques (14) sur le côté de diamètre externe ou le côté de diamètre interne de l'élément de retenue (15) ne présentant pas la surface guide de rouleau (15c) ; et une découpe (15e) constituée sur une surface circonférentielle externe d'une partie de bague de grand diamètre (15a) de l'élément de retenue (15) pour rendre la partie de bague (15a) plus fine qu'une partie de colonne présentant la surface guide (15c) de l'élément de retenue (15).

3. Le roulement à rouleaux coniques (11) selon la revendication 2, dans lequel une relation exprimée sous la forme |P-P'| ≥ C est satisfaite, où P représente un rayon circonscrit du rouleau (14) lorsque le rouleau (14) est en contact avec la surface guide de rouleau (15c) ; P' représente un rayon circonscrit du rouleau (14) lorsque le rouleau (14) est en contact avec l'ergot (15d) de l'élément de retenue (15) ; et C représente une hauteur de la bride de bague externe (12b) à partir de la surface de piste de bague externe (12a) ; et la bride (12b) présente un angle de diamètre externe γ de 35 ° à 50 °.
